# EUROPEAN PATENT APPLICATION

(11) **EP 3 812 173 A1**
(43) Date of publication of application: **28.04.2021**
(21) Application number: 19826066.3
(22) Date of filing: 13.06.2019
(51) Int. Cl.: B60C 9/22, B60C 9/20

(54) **TIRE**

(30) Priority: 25.06.2018 JP 2018120276
(71) Applicant: Bridgestone Corporation, Chuo-Ku Tokyo 104-8340 (JP)
(72) Inventor: KURATA, Takayuki, Tokyo 104-8340 (JP)
(74) Representative: Oxley, Robin John George
(86) International application number: PCT/JP2019/023514
(87) International publication number: WO 2020/004063

(57) **Abstract**

A tire includes a tire case and a belt provided at an outer periphery of the tire case. A resin-covered cord of the belt is formed of reinforcing cords covered with a resin. The resin-covered cord is wound in a helical shape in the tire circumference direction on the outer periphery of the tire case and is joined to the tire case. Portions of the resin-covered cord that are adjacent to one another in the tire axis direction are joined to one another. Areas of tire diameter direction cross sections of an end portion of the resin-covered cord decrease toward a tip of the resin-covered cord. The reinforcing cords are exposed at a tapered surface of the end portion.

## Description

### Technical Field

The present disclosure relates to a tire.

### Background Art

Japanese Patent Application Laid-Open (JP-A) No. 2014-210487 discloses the provision of a belt in which a reinforcing cord member formed of reinforcing cords covered with a covering resin (below referred to as a resin-covered cord) is wound in a helical shape in a tire circumference direction and joined to an outer periphery of a tire skeleton member.

### SUMMARY OF INVENTION

### Technical Problem

When a resin-covered cord is wound in a helical shape and joined to form a belt as in the conventional technology mentioned above, a number of windings of the resin-covered cord arranged in a tire axis direction changes at the position of an end portion of the resin-covered cord. Thus, bending stiffness of the belt in the tire axis direction changes greatly at the position in the tire axis direction of the end portion of the resin-covered cord.

Consequently, bending stress caused by pressure and heating during vulcanization molding to mold a tire is concentrated in a portion of the resin-covered cord that is disposed one winding to the inner side of the end portion of the resin-covered cord and act to cause strain, which affects tire durability. There is scope for improvement in this respect.

An object of the present disclosure is to improve durability of a tire that includes a belt formed by winding a resin-covered cord in a helical shape.

### Solution to Problem

A tire according to the present disclosure includes: a ring-shaped tire skeleton member; and a belt in which a resin-covered cord is wound in a helical shape in a tire circumference direction at an outer periphery of the tire skeleton member and is joined to the tire skeleton member, portions of the resin-covered cord that are adjacent to one another in a tire axis direction being joined to one another, and the resin-covered cord being formed of a reinforcing cord covered with a covering resin. An end portion of the resin-covered cord is joined to a portion of the resin-covered cord that is adjacent to a tire axis direction inner side of the end portion, areas of cross sections in a tire diameter direction of the end portion decrease toward a tip of the resin-covered cord, and the reinforcing cord is exposed at an end face of the resin-covered cord.

In this tire, the belt is formed by winding the resin-covered cord in the helical shape on the outer periphery (the tire diameter direction outer side) of the tire skeleton member, joining the resin-covered cord to the tire skeleton member, and joining adjacent windings of the resin-covered cord to one another.

At the end portion of the resin-covered cord, the areas of cross sections along the tire diameter direction decrease toward the tip of the end portion. Therefore, a large change in bending stiffness of the belt (a step in stiffness) along the tire circumference direction in the vicinity of a location of the tip of the resin-covered cord is suppressed.

Consequently, a concentration of bending stress caused by the action of pressure and heating during vulcanization molding of the tire, at the end portion of the resin-covered cord and in the resin-covered cord disposed one winding to the inner side in the tire axis direction, is moderated and a concentration of strain in this region is suppressed. As a result, durability of the tire is improved.

An end portion of each reinforcing cord of this resin-covered cord is exposed at an end face of the resin-covered cord. Therefore, the end portion of the resin-covered cord that is formed in a long and narrow shape may be formed simply by cutting the resin-covered cord in accordance with the end portion (end face shape) of the resin-covered cord.

### ADVANTAGEOUS EFFECTS OF INVENTION

According to the present disclosure, durability of a tire that includes a belt formed by winding a resin-covered cord in a helical shape may be improved.

### BRIEF DESCRIPTION OF DRAWINGS

Fig. 1 is a tire diameter direction sectional diagram showing a tire according to a first exemplary embodiment.
Fig. 2 is a tire diameter direction view showing one side in a tire axis direction of a belt of the tire according to the first exemplary embodiment
Fig. 3 is an enlarged view of principal portions in Fig. 2.
Fig. 4A is a schematic perspective view showing one end side in the tire axis direction of the belt of the tire according to the first exemplary embodiment.
Fig. 4B is a sectional diagram along section SA1 in Fig. 4A.
Fig. 4C is a sectional diagram along section SA2 in Fig. 4A.
Fig. 4D is a sectional diagram along section SA3 in Fig. 4A.
Fig. 5 is an enlarged tire diameter direction view of principal portions showing one side in the tire axis direction of a belt of a tire according to a variation of the first exemplary embodiment.
Fig. 6 is an enlarged tire diameter direction view of principal portions showing one side in the tire axis direction of a belt of a tire according to a second exemplary embodiment.
Fig. 7 is an enlarged tire diameter direction view of principal portions showing one side in the tire axis direction of a belt of a tire according to a variation of the second exemplary embodiment.
Fig. 8 is an enlarged tire diameter direction view of principal portions showing one side in the tire axis direction of a belt of a tire according to a third exemplary embodiment.
Fig. 9 is an enlarged tire diameter direction view of principal portions showing one side in the tire axis direction of a belt of a tire according to a variation of the third exemplary embodiment.
Fig. 10 is an enlarged perspective view of principal portions showing one side in the tire axis direction of a belt of a tire according to a fourth exemplary embodiment.
Fig. 11 is an enlarged perspective view of principal portions showing one side in the tire axis direction of a belt of a tire according to a variation of the fourth exemplary embodiment.
Fig. 12 is an enlarged tire diameter direction view of principal portions showing one side in the tire axis direction of a belt of a tire according to another variation of the first exemplary embodiment.
Fig. 13A is a tire diameter direction view of a belt of a tire according to an alternative example.
Fig. 13B is a tire diameter direction sectional diagram of a resin-covered cord 134A constituting the belt.
Fig. 13C is a tire diameter direction sectional diagram of a resin-covered cord 34 constituting the belt.
Fig. 13D is a tire diameter direction sectional diagram of a resin-covered cord 134B constituting the belt.

### DETAILED DESCRIPTION

### = First Exemplary Embodiment =

Below, a first exemplary embodiment of the present invention is described in accordance with the drawings. In the drawings, a tire circumference direction is indicated by arrow S, a tire axis direction (which may also be referred to as the tire width direction) is indicated by arrow W, and a tire diameter direction is indicated by arrow R. The meaning of the term "tire width direction" is intended to include directions parallel to a tire rotation axis.

A side in the tire width direction that is further from a tire equator plane CL is described as "the tire width direction outer side", and a side in the tire width direction that is closer to the tire equator plane CL is described as "the tire width direction inner side". A side in the tire diameter direction that is further from the tire axis is referred to as "the tire diameter direction outer side", and a side in the tire diameter direction that is closer to the tire axis is referred to as "the tire diameter direction inner side".

Methods of measuring dimensions of respective parts are the methods described in the 2018 edition of the JATMA YEAR BOOK. A usage site or production site complies with the respective standards when the TRA (Tire and Rim Association) standards and the ETRTO (European Tire and Rim Technical Organisation) standards are applied.

### - Tire -

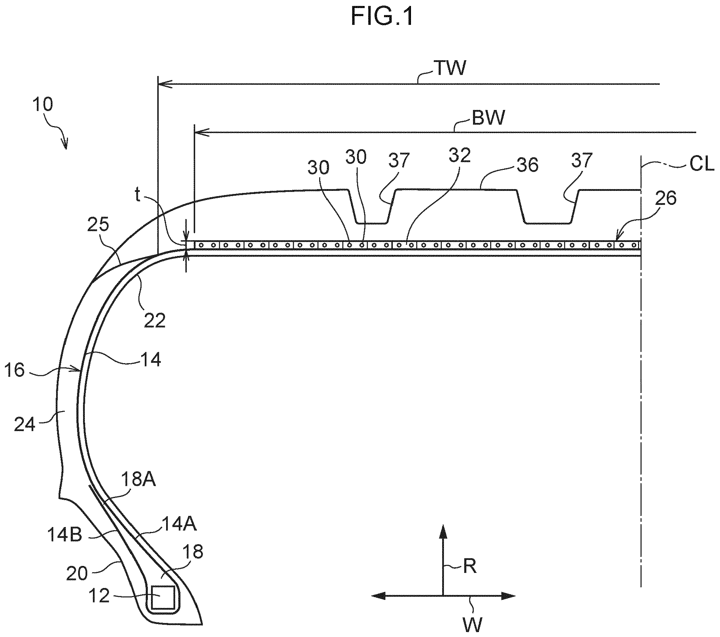

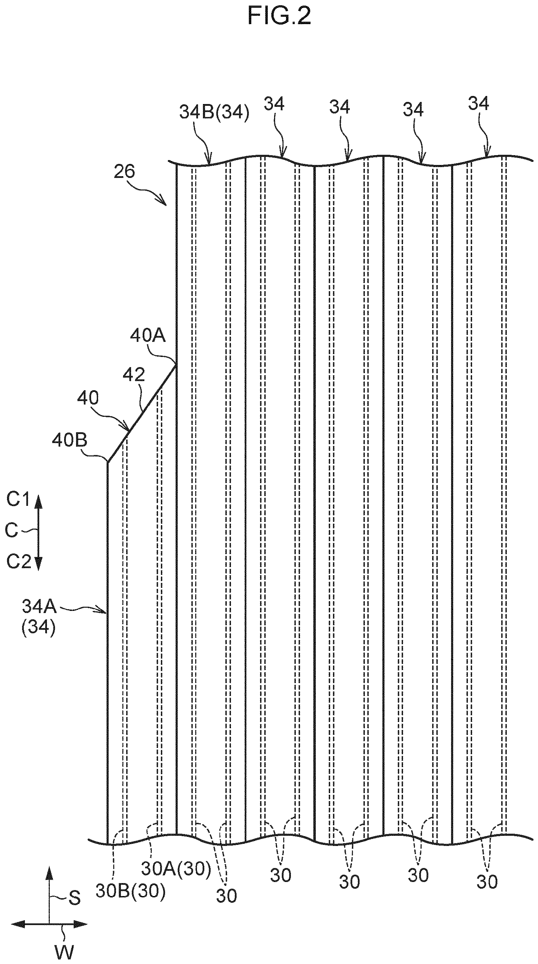

A pneumatic tire 10 according to the present exemplary embodiment of the invention is described using Fig. 1 and Fig. 2.

As shown in Fig. 1, the pneumatic tire 10 according to the present exemplary embodiment is, for example, a "radial tire" to be used on a car. The pneumatic tire 10 is provided with a pair of bead portions 20 in which bead cores 12 are embedded. A carcass 16 is formed of a single-layer carcass ply 14 spanning between one of the bead portions 20 and the other of the bead portions 20 (which is not shown in the drawings). Fig. 1 shows a shape of the pneumatic tire 10 in a natural state prior to being filled with air.

The carcass ply 14 is formed by covering plural cords (not shown in the drawings) that extend in a radial direction of the pneumatic tire 10 with a coating rubber (not shown in the drawings). Thus, the pneumatic tire 10 according to the present exemplary embodiment is what is known as a radial tire. A material of the cords of the carcass ply 14 is, for example, PET but may be an alternative conventional, publicly known material.

Tire axis direction end portions of the carcass ply 14 are folded back toward the tire diameter direction outer sides around the bead cores 12. A portion of the carcass ply 14 that extends from the one bead core 12 to the other bead core 12 (which is not shown in the drawings) is referred to as a main body portion 14A, and portions of the carcass ply 14 that are folded back from the bead cores 12 are referred to as folded-back portions 14B.

A bead filler 18 whose thickness tapers toward the tire diameter direction outer side from each bead core 12 is disposed between the main body portion 14A and the folded-back portion 14B. Portions of the pneumatic tire 10 at the tire diameter direction inner sides relative to tire diameter direction outer side ends 18A of the bead fillers 18 serve as the bead portions 20.

An inner liner 22 formed of a rubber is disposed at the tire inner side of the carcass 16. A side rubber layer 24 formed of a first rubber material is disposed at each tire width direction outer side of the carcass 16.

In the present exemplary embodiment, a tire case 25 is constituted by the bead cores 12, the carcass 16, the bead fillers 18, the inner liner 22 and the side rubber layers 24. In other words, the tire case 25 is a tire skeleton member forming a skeleton of the pneumatic tire 10.

### - Belt -

A belt 26 is disposed at the outer side of a crown portion of the carcass 16, that is, at the tire diameter direction outer side of the carcass 16. The belt 26 is in area contact with an outer periphery face of the carcass 16. The belt 26 is formed by winding on a resin-covered cord 34. In the resin-covered cord 34, a plural number (two in the present exemplary embodiment) of reinforcing cords 30 are covered with a resin 32. The resin 32 corresponds to a "covering resin".

It is preferable if the cords employed as the reinforcing cords 30 of the belt 26 are thicker and greater in strength (tensile strength) than the cords of the carcass ply 14. The reinforcing cords 30 of the belt 26 may be constituted of monofilaments (single fibers) of metal fiber, organic fiber or the like, or of multifilaments (twisted fibers) in which these fibers are twisted. The reinforcing cords 30 according to the present exemplary embodiment are steel cords. The reinforcing cords 30 that are employed may be, for example, "1×5" steel cords with a diameter of 0.225 mm; steel cords with alternative conventional, publicly known constitutions may be employed.

A resin material employed for the resin 32 covering the reinforcing cords 30 is a resin material with a higher tensile modulus of elasticity than the rubber constituting the side rubber layer 24 and a second rubber material constituting a tread 36, which is described below. A thermoplastic resin, thermoplastic elastomer (TPE), thermosetting resin or the like featuring resilience may be employed as the resin 32 covering the reinforcing cords 30. In consideration of resilience during running and moldability during fabrication, it is desirable to employ a thermoplastic elastomer.

Thermoplastic elastomers that can be mentioned include polyolefin-based thermoplastic elastomers (TPO), polystyrene-based thermoplastic elastomers (TPS), polyamide-based thermoplastic elastomers (TPA), polyurethane-based thermoplastic elastomers (TPU), polyester-based thermoplastic elastomers (TPC), dynamically vulcanized thermoplastic elastomers (TPV), and the like.

Thermoplastic resins that can be mentioned include polyurethane resins, polyolefin resins, vinyl chloride resins, polyamide resins, and the like. For example, a thermoplastic resin material that may be employed has a deflection temperature under load as defined in ISO 75-2 or ASTM D648 (0.45 MPa load) of at least 78°C, a tensile yield strength as defined in JIS K7113 of at least 10 MPa, a tensile elongation at break as defined in JIS K7113 of at least 50%, and a Vicat softening temperature as defined in JIS K7206 (method A) of at least 130°C.

It is preferable if the tensile modulus of elasticity of the resin 32 covering the reinforcing cords 30 as defined in JIS K7113:1995 is at least 100 MPa. It is also preferable if an upper limit of the tensile modulus of elasticity of the resin 32 covering the reinforcing cords 30 is not more than 1000 MPa. It is particularly preferable if the tensile modulus of elasticity of the resin 32 covering the reinforcing cords 30 is within the range 200 to 700 MPa.

As illustrated in Fig. 1, a thickness dimension t of the belt 26 according to the present exemplary embodiment is preferably greater than a diameter dimension of the reinforcing cords 30. That is, it is preferable if the reinforcing cords 30 are completely embedded in the resin 32. When the pneumatic tire 10 is for use on a car, it is preferable if the thickness dimension t of the belt 26 is, to be specific, at least 0.70 mm.

As illustrated in Fig. 1 and Fig. 2, the resin-covered cord 34 constituting the belt 26 is wound round the tire case 25 in a helical shape and windings of the resin-covered cord 34 that, as seen in a tire diameter direction, are adjacent in the tire axis direction are joined (abutted) together.

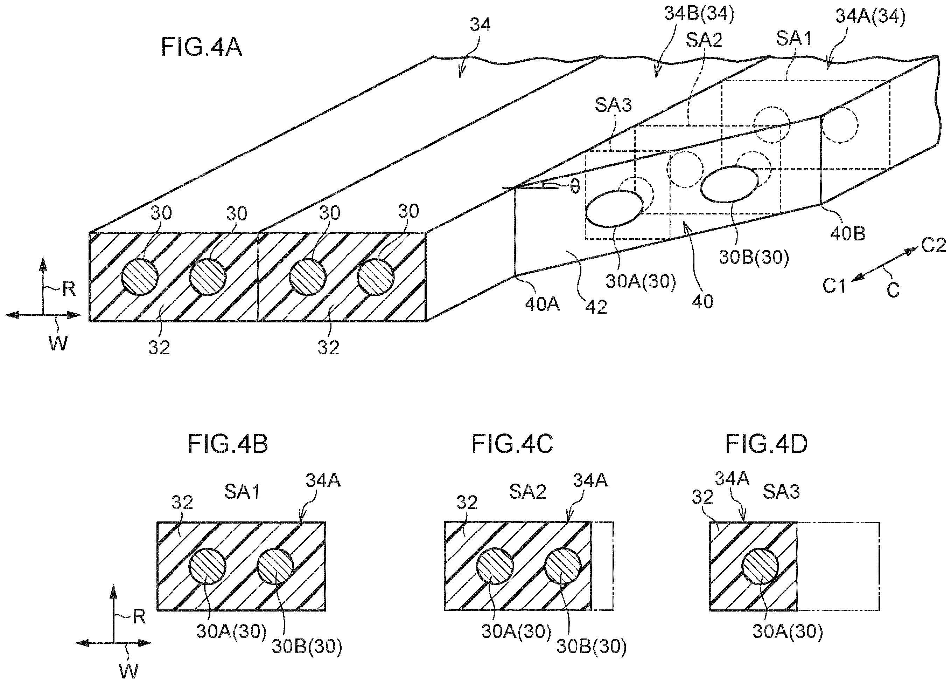

In tire diameter direction sectional diagrams, as shown in Fig. 1 and Fig. 4A, the resin-covered cord 34 is rectangular and two of the reinforcing cords 30 are disposed inside the resin-covered cord 34, arrayed in the tire axis direction.

Windings of the resin-covered cord 34 are disposed to be arrayed in the tire axis direction. As shown in Fig. 2, as seen in the tire diameter direction, windings of the resin-covered cord 34 that are adjacent in the tire axis direction are abutted (joined) together to structure the belt 26.

A winding of the resin-covered cord 34 that is disposed furthest to the tire axis direction outer side (furthest to the left side in Fig. 2; this winding is below referred to as the resin-covered cord 34A) includes an end portion 40 in a winding direction C.

The meaning of the term "winding direction" as used herein is intended to include the direction in which the resin-covered cord 34 is wound in the helical shape on the tire case 25. The meaning of the term " winding direction one end side" as used below (the direction of arrow C1 in Fig. 2) is intended to include a direction toward one end side of the resin-covered cord 34 in the winding direction along the resin-covered cord 34, and the term "winding direction other end side" (the direction of arrow C2 in Fig. 2) is intended to include a direction toward another end side of the resin-covered cord 34, which is not shown in the drawings.

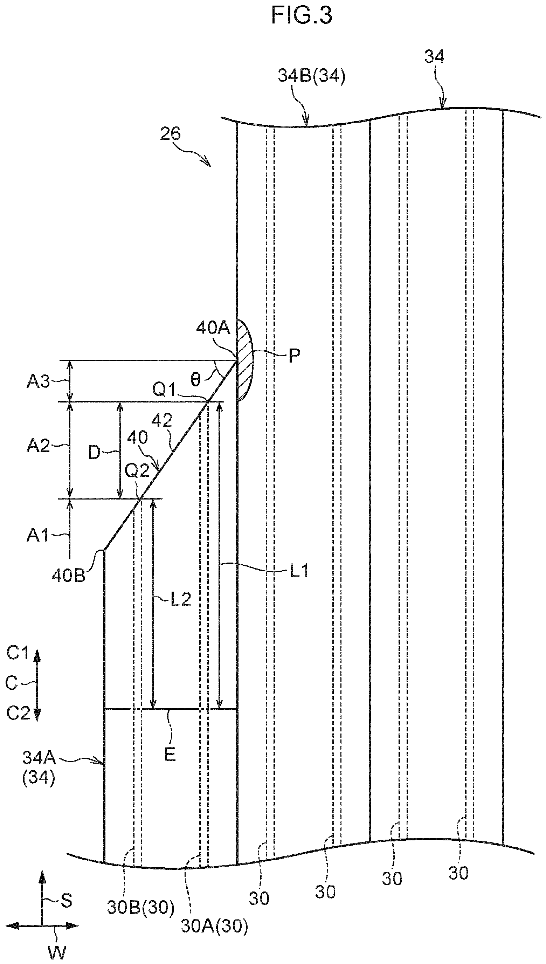

In the present exemplary embodiment, a region shown in Fig. 3 from a section E cut in a direction orthogonal to the winding direction (referred to below as "the orthogonal direction") to the side thereof at which a tip 40A is disposed is referred to as the "winding direction length of the end portion 40".

As shown in Fig. 3, a tapered surface 42 is formed at the end portion 40 of the resin-covered cord 34, from a tire axis direction inner side end portion (the tip) 40A to a tire axis direction outer side end portion 40B (the left side in Fig. 3). The tapered surface 42 is angled at an angle θ toward the winding direction other end side from the tire axis direction outer side as seen in the tire diameter direction.

To put this another way, the tapered surface 42 is formed simply by diagonally cutting the end portion of the resin-covered cord 34 that is continuously formed. Hence, as shown in Fig. 3, a winding direction length L1 of the reinforcing cord 30 that is at the tire axis direction inner side of the end portion 40 of the resin-covered cord 34 (below referred to as the reinforcing cord 30A) is longer than a winding direction length L2 of the reinforcing cord 30 that is at the tire axis direction outer side (below referred to as the reinforcing cord 30B).

As shown in Fig. 1, the tread 36 formed of the second rubber material is disposed at the tire diameter direction outer side of the belt 26. The second rubber material that is employed for the tread 36 may be a conventional common, publicly known rubber material. Grooves 37 for drainage are formed in the tread 36. A pattern of the tread 36 that is employed may be a conventional common, publicly known pattern.

It is preferable if a width BW of the belt 26 measured along the tire axis direction is at least 75% of a contact patch width TW of the tread 36 measured along the tire axis direction. A preferable upper limit of the width BW of the belt 26 is 110% of the contact patch width TW.

The contact patch width TW of the tread 36 is a region that is loaded in accordance with a maximum load performance when the pneumatic tire 10 is mounted to a standard rim complying with the JATMA YEAR BOOK (from the Japan Automobile Tire Manufacturers Association, 2018 edition), filled to an internal pressure of 100% of an air pressure (a maximum air pressure) corresponding with the maximum load performance (the bold-text load in the table of internal pressure against load performance) in the JATMA YEAR BOOK for the employed size and ply rating, and disposed such that the rotation axis thereof is parallel with a horizontal plate in a static state. A usage site or production site complies with the respective standards when the TRA standards and the ETRTO standards are applied.

In-plane shear stiffness of the belt 26 is preferably higher than an in-plane shear stiffness of a belt formed with a rubber covering.

### - Operation and Effects -

Now, operation and effects of the pneumatic tire 10 according to the present exemplary embodiment are described.

In the pneumatic tire 10 according to the present exemplary embodiment, the resin-covered cord 34 constituting the belt 26 is wound on the tire case 25 in the helical shape. At the end portion 40 of the resin-covered cord 34 (34A), as seen in the tire diameter direction, the tapered surface 42 is formed that is angled to the winding direction other end side (the direction of arrow C2) at the angle θ relative to a direction from the tire axis direction inner side end portion 40A toward the tire axis direction outer side.

Therefore, at the end portion 40 of the resin-covered cord 34, as shown in Fig. 4A to Fig. 4D, the areas of tire diameter direction cross sections SA2 and SA3 (see Fig. 4C and Fig. 4D) in a region in which the tapered surface 42 is formed decrease toward the tip 40A relative to the area of a tire diameter direction cross section SA1 (see Fig. 4B) that is in a region in which the tapered surface 42 is not formed. That is, areas of tire diameter direction cross sections decrease toward the tip (tire axis direction inner side end portion) 40A in the tire circumference direction (toward one end portion in the winding direction). In other words, the areas of cross sections in the tire diameter direction of the resin-covered cord 34A decrease in the tire circumference direction at the end portion 40 of the resin-covered cord 34A.

As a result, a change in bending stiffness of the belt 26 in the tire circumference direction, which is formed by joining tire axis direction side faces of the resin-covered cord 34 including the resin-covered cord 34A, is moderated.

The winding direction lengths L1 and L2 of the two reinforcing cords 30A and 30B disposed at the resin-covered cord 34A are set to be shorter at the tire axis direction outer side (i.e., L1>L2). That is, an end portion exposure position Q2 in the tapered surface 42 of the reinforcing cord 30B that is at the tire axis direction outer side is disposed at the other end side (the direction of arrow C2) in the winding direction (the direction of arrow C) relative to an end portion exposure position Q1 in the tapered surface 42 of the reinforcing cord 30A that is at the tire axis direction inner side. In other words, the end portion 40 is formed such that the further the end portion exposure position of each reinforcing cord 30 is from the tire axis direction outer side, the more distant the end portion exposure position is from the tip 40A in the winding direction.

Thus, toward the tip 40A as shown in Fig. 3, a range A1 in which the two reinforcing cords 30A and 30B are present, a range A2 in which only one of the reinforcing cords is present, and a range A3 in which no reinforcing cord is present are structured at the end portion 40 of the resin-covered cord 34A.

Therefore, the bending stiffness of the resin-covered cord 34A decreases toward the tip 40A. As a result, a large change in bending stiffness of the belt along the tire circumference direction in the vicinity of the location of the tip of the resin-covered cord 34 is suppressed (a step in stiffness is suppressed).

Consequently, a concentration of bending stress caused by the action of pressure and heating during vulcanization molding of the pneumatic tire 10 in the resin-covered cord 34B (see region P in Fig. 3) that is disposed one winding to the inner side in the tire axis direction from the end portion 40 of the resin-covered cord 34 (34A) is moderated, and a concentration of strain in this region is suppressed. As a result, durability of the pneumatic tire 10 is improved.

Because the end face of the end portion 40 of the resin-covered cord 34A is formed by the tapered surface 42 that is angled to the winding direction other end side (the direction of arrow C2) at the predetermined angle θ relative to the direction from the tire axis direction inner side end portion 40A toward the tire axis direction outer side, the tapered surface 42 may be formed simply by diagonally cutting the resin-covered cord that is formed in a long and narrow shape. Thus, productivity of the pneumatic tire 10 (the resin-covered cord 34) is improved.

In the pneumatic tire 10, because the belt 26 has a single-layer structure, the thickness of the belt 26 may be reduced compared to a conventional structure formed with two or more belt plies. Thus, thickness of the tread 36 may be increased by a corresponding amount, and depths of the grooves 37 may be increased. As a result, a lifespan of the pneumatic tire 10 may be extended.

In the belt 26 of the pneumatic tire 10, the reinforcing cords 30 are wound in helical shapes and there are no regions of the circumference in which the reinforcing cords 30 are superposed in the tire diameter direction. Thus, the thickness of the belt 26 is uniform in the tire circumferential direction, and uniformity of the pneumatic tire 10 is excellent.

If the thickness t of the belt 26, which is to say the thickness of the resin 32, were less than 0.7 mm, it might not be possible to make the reinforcing cords 30 embedded in the resin 32 thick and provide hoop effect.

If the thickness BW of the belt 26 were less than 75% of the contact patch width TW of the tread 36, the hoop effect of the belt 26 might be insufficient, and it might be difficult to suppress the generation of noise in the vicinity of the shoulder 39. Alternatively, if the thickness BW of the belt 26 were greater than 100% of the contact patch width TW of the tread 36, the hoop effect would plateau and the belt 26 would be wider than necessary, leading to an increase in weight of the pneumatic tire 10.

In the pneumatic tire 10 according to the present exemplary embodiment, because the crown portion of the carcass 16 is reinforced by the belt 26 in which the reinforcing cords 30 wound in helical shapes are covered with the resin 32, weight may be reduced compared to a belt of a conventional tire that is formed of plural layers constituted with two or more belt plies, and fabrication is simpler.

In the belt 26 according to the present exemplary embodiment, the tensile modulus of elasticity of the resin 32 covering the reinforcing cords 30 is at least 100 MPa, and the thickness of the belt 26 is assured of being at least 0.7 mm. Therefore, the in-plane shear stiffness of the belt 26 in the tire axis direction may be thoroughly assured.

Because the in-plane shear stiffness of the belt 26 is assured, sufficient lateral force may be generated when a slip angle is applied to the pneumatic tire 10. Therefore, steering stability may be assured and responsiveness may be improved.

In addition, out-of-plane shear stiffness of the belt 26 is assured. Therefore, when a large lateral force is applied to the pneumatic tire 10, buckling of the tread 36 (a phenomenon in which the surface of the tread 36 undulates and a portion of the tread 36 separates from the ground) may be suppressed.

In the pneumatic tire 10 according to the present exemplary embodiment, because the belt 26 with high in-plane shear stiffness is employed and the width BW of the belt 26 is at least 75% of the contact patch width TW of the tread 36, stiffness of the vicinity of the shoulder 39 may be raised.

### - Variation -

In the first exemplary embodiment, a structure in which two of the reinforcing cords 30 are disposed in the resin-covered cord 34 is described. However, the number of reinforcing cords may be three or more, and may be one. A pneumatic tire 10A in which the number of reinforcing cords is one is described. Where structural elements are the same as in the first exemplary embodiment, the same reference symbols are assigned and details thereof are not described here.

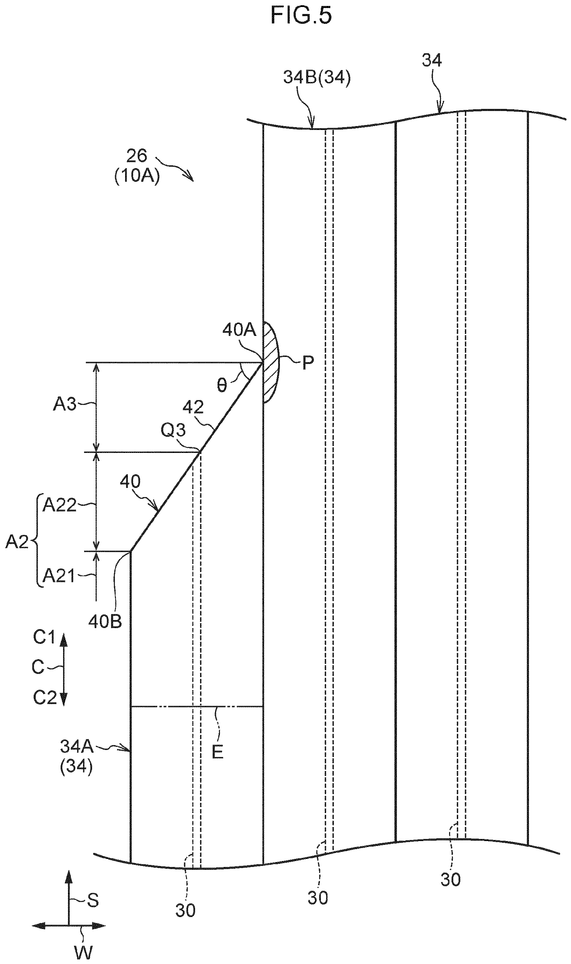

As shown in Fig. 5, only the one reinforcing cord 30 is provided in the resin-covered cord 34 constituting the belt 26. At the end portion 40, the tapered surface 42 is formed to be angled to the winding direction other end side (see the direction of arrow C2) at the angle θ relative to the direction from the tire axis direction inner side end portion 40A toward the tire axis direction outer side (the left side in Fig. 5).

In other words, the tapered surface 42 is formed to be angled to the tip 40A side relative to a direction from the tire axis direction outer side end portion 40B toward the tire axis direction inner side. Therefore, the areas of tire diameter direction cross sections of the end portion 40 decrease toward the tip 40A of the resin-covered cord 34A (in ranges A22 and A3).

Toward the tip 40A in the winding direction (the direction of arrow C), a range A2 in which the one reinforcing cord 30 is present and a range A3 in which no reinforcing cord is present are structured at the end portion 40. The range A2 is structured as far as an end portion exposure position Q3 of the reinforcing cord 30, and the range A3 is structured from the end portion exposure position Q3 to the tip 40A.

Therefore, a large change in bending stiffness of the belt 26 including the resin-covered cord 34A along the tire circumference direction in the vicinity of the location of the tip is suppressed. As a result, durability of the tire is improved.

Thus, tire durability may be improved even when only one of the reinforcing cords 30 is disposed in the resin-covered cord 34.

### = Second Exemplary Embodiment =

A tire according to a second exemplary embodiment of the present invention is described in accordance with the drawings. Structural elements that are the same as in the first exemplary embodiment are assigned the same reference symbols; details thereof are not described here. Only the shape of the end portion of the resin-covered cord differs from the tire according to the first exemplary embodiment. Therefore, only this region is described.

### - Structure -

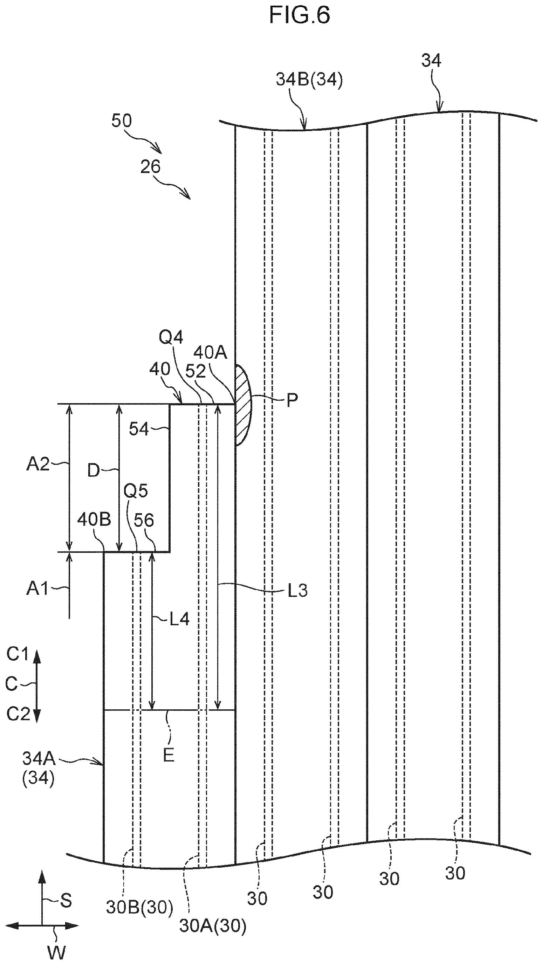

As shown in Fig. 6, the end portion 40 of the resin-covered cord 34 that constitutes the belt 26 of a tire 50 is provided with a first end face 52, a side face 54 and a second end face 56. The first end face 52 extends in the orthogonal direction from the tire axis direction inner side end portion 40A. The side face 54 extends from a tire axis direction outer side end portion of the first end face 52 by a distance D along the winding direction to the winding direction other end side (see the direction of arrow C2). The second end face 56 extends from a winding direction other end portion of the side face 54 to the tire axis direction outer side end portion 40B.

The end portion of the reinforcing cord 30A is exposed at the first end face 52, and the reinforcing cord 30B is exposed at the second end face 56. Therefore, in the end portion 40 of the resin-covered cord 34A, a winding direction length L3 of the reinforcing cord 30A that is disposed at the tire axis direction inner side is longer than a winding direction length L4 of the reinforcing cord 30B that is disposed at the tire axis direction outer side.

### - Operation -

In the end portion 40 of this resin-covered cord, the closer each reinforcing cord 30 is disposed to the tire axis direction outer side, the shorter the winding direction length of the reinforcing cord 30 (i.e., L3>L4). That is, an end portion exposure position Q5 in the second end face 56 of the reinforcing cord 30B that is at the tire axis direction outer side is disposed at the other end side (the direction of arrow C2) in the winding direction (the direction of arrow C) relative to an end portion exposure position Q4 in the first end face 52 of the reinforcing cord 30A that is at the tire axis direction inner side. In other words, the end portion 40 is formed such that the further the end portion exposure position of each reinforcing cord 30 is from the tire axis direction outer side, the more distant the end portion exposure position is from the tip 40A in the winding direction.

Thus, toward the tip 40A in the tire circumference direction, a range A1 in which the two reinforcing cords 30A and 30B are present and a range A2 in which only the one reinforcing cord 30A is present are structured at the end portion 40 of the resin-covered cord 34A. The range A1 is structured as far as the second end face 56, and the range A2 is structured from the second end face 56 to the first end face 52 (the tip 40A).

The tire axis direction width of the resin-covered cord 34A narrows in a stepwise manner toward the tip 40A. That is, the areas of diameter direction cross sections of the resin-covered cord 34A decrease in a stepwise manner toward the tip 40A.

Therefore, the bending stiffness of the belt 26 (the resin-covered cord 34A) decreases toward the tip 40A in the tire circumference direction.

Thus, a large change in stiffness of the belt 26 along the tire circumference direction in the vicinity of the location of the tip of the resin-covered cord 34 is suppressed (a step in stiffness is suppressed).

Consequently, a concentration of bending stress caused by the action of pressure and heating during vulcanization molding of the tire 50 in the resin-covered cord 34B (see region P in Fig. 6) that is disposed one winding to the inner side in the tire axis direction from the end portion 40 of the resin-covered cord 34 (the resin-covered cord 34A) is moderated, and a concentration of strain in this region may be suppressed. As a result, durability of the tire 50 is improved.

In the tire 50, the end portions of the reinforcing cords 30A and 30B are exposed at, respectively, the first end face 52 and the second end face 56 constituting the end portion 40 of the resin-covered cord 34. Therefore, when a resin-covered cord that is formed continuously is being cut to a predetermined length, the reinforcing cords 30A and 30B may be cut in the orthogonal direction.

### - Variation -

In the second exemplary embodiment, a structure in which two of the reinforcing cords 30 are disposed in the resin-covered cord 34 is described. However, the number of reinforcing cords may be three or more, and may be one. A pneumatic tire 50A in which the number of reinforcing cords is one is described. Where structural elements are the same as in the second exemplary embodiment, the same reference symbols are assigned and details thereof are not described here.

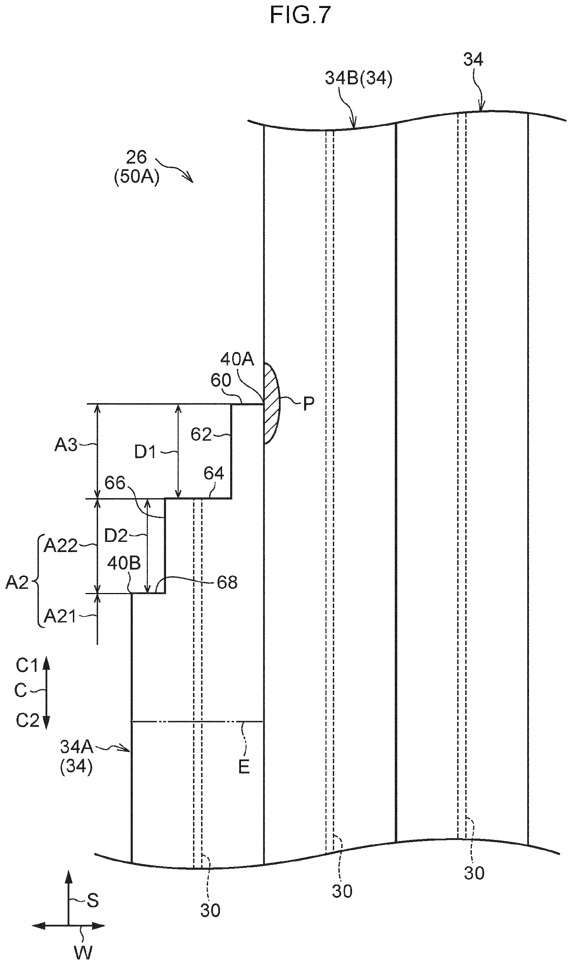

As shown in Fig. 7, only one of the reinforcing cords 30 is provided in the resin-covered cord 34 constituting the belt 26. The end portion 40 of the resin-covered cord 34 is provided with a first end face 60, a first side face 62, a second end face 64, a second side face 66 and a third end face 68. The first end face 60 extends in the orthogonal direction from the tire axis direction inner side end portion 40A. The first side face 62 extends from a tire axis direction outer side end portion of the first end face 60 by a distance D1 along the tire circumference direction to the winding direction other end side (see the direction of arrow C2). The second end face 64 extends in the orthogonal direction from a winding direction other end portion of the first side face 54. The second side face 66 extends from a tire axis direction outer side end portion of the second end face 64 by a distance D2 along the tire circumference direction to the winding direction other end side (see the direction of arrow C2). The third end face 68 extends in the orthogonal direction from a winding direction other end portion of the second side face 66.

The end portion of the reinforcing cord 30 is exposed at the second end face 64.

At the end portion 40 of this resin-covered cord 34A, three steps-the first end face 60, the second end face 64 and the third end face 68-are formed in a stepped shape in the tire circumference direction. Therefore, the width of the end portion 40 narrows in a stepwise manner in successive ranges A21, A22 and A3 in the winding direction toward the tip 40A.

Because the end portion 40 of the resin-covered cord 34A is formed in the stepped shape as seen in the tire diameter direction, toward the tip 40A in the winding direction, a range A2 in which the one reinforcing cord 30 is present and a range A3 in which no reinforcing cord is present are formed. The range A2 is formed as far as the second end face 64. The range A3 is formed from the second end face 64 to the first end face 60.

As a result, in the belt 26 that is constituted by the resin-covered cord 34 including the resin-covered cord 34A, a large change in bending stiffness of the belt 26 along the tire circumference direction in the vicinity of the tip (tire axis direction inner side end portion) 40A of the resin-covered cord 34 is suppressed.

Consequently, a concentration of bending stress caused by the action of pressure and heating during vulcanization molding of a tire 70A in the resin-covered cord 34B (see region P in Fig. 7) that is disposed one winding to the inner side in the tire axis direction from the end portion 40 of the resin-covered cord 34 (34A) is moderated, and a concentration of strain in this region may be suppressed. As a result, durability of the tire 70A is improved.

Thus, tire durability may be improved even when only one of the reinforcing cords 30 is disposed in the resin-covered cord 34.

### = Third Exemplary Embodiment =

A tire according to a third exemplary embodiment of the present invention is described in accordance with the drawings. Structural elements that are the same as in the first or second exemplary embodiment are assigned the same reference symbols; details thereof are not described here. Only the shape of the end portion of the resin-covered cord differs from the tires according to the first and second exemplary embodiments. Therefore, only this region is described.

### - Structure -

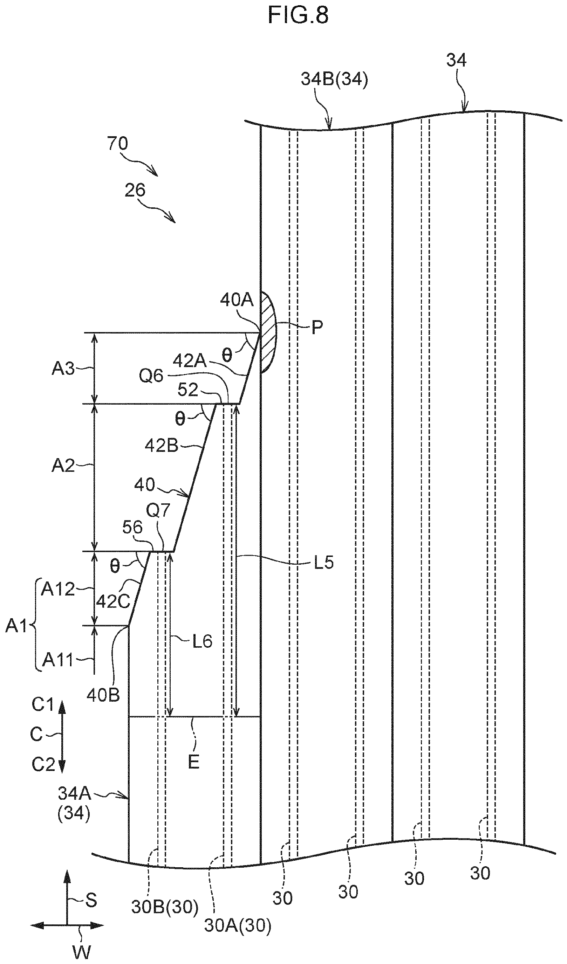

As shown in Fig. 8, in the end portion 40 of the resin-covered cord 34 constituting the belt 26 of a tire 70, tapered surfaces 42A, 42B and 42C connect between the tire axis direction inner side end portion 40A, the first end face 52, the second end face 56, and the tire axis direction outer side end portion 40B.

To be specific, the tapered surface 42A, the first end face 52, the tapered surface 42B, the second end face 56 and the tapered surface 42B are provided. The tapered surface 42A is angled to the winding direction other end side (the direction of arrow C2 in Fig. 2) at an angle θ relative to the direction from the tire axis direction inner side end portion 40A toward the tire axis direction outer side. The first end face 52 extends in the orthogonal direction from a tire axis direction outer side end portion of the tapered surface 42A. The tapered surface 42B is angled to the winding direction other end side at the angle θ relative to a direction from the orthogonal direction outer side end portion of the first end face 52 toward the tire axis direction outer side. The second end face 56 extends in the orthogonal direction from a tire axis direction outer side end portion of the tapered surface 42B. The tapered surface 42B is angled to the winding direction other end side at the angle θ relative to a direction from the orthogonal direction outer side end portion of the second end face 52 toward the tire axis direction outer side, and extends to the tire axis direction outer side end portion 40B.

End portions of the reinforcing cords 30A and 30B are exposed at the first end face 52 and the second end face 56.

### - Operation -

In the end portion 40 of this resin-covered cord 34A, the closer each reinforcing cord 30 is disposed to the tire axis direction outer side, the shorter the winding direction length of the reinforcing cord 30 (i.e., L5>L6). That is, an end portion exposure position Q7 in the second end face 56 of the reinforcing cord 30B that is at the tire axis direction outer side is disposed at the other end side (the direction of arrow C2) in the winding direction (the direction of arrow C) relative to an end portion exposure position Q6 in the first end face 52 of the reinforcing cord 30A that is at the tire axis direction inner side. In other words, the end portion 40 is formed such that the further the end portion exposure position of each reinforcing cord 30 is from the tire axis direction outer side, the more distant the end portion exposure position is from the tip 40A in the winding direction.

Because the tire 70 is structured thus, toward the tip 40A from the winding direction other end side (the direction of arrow C2 in Fig. 2) of the resin-covered cord 34A, a range A1 in which the two reinforcing cords 30A and 30B are present, a range A2 in which only the one reinforcing cord 30A is present, and a range A3 in which no reinforcing cord is present are structured at the end portion 40. The range A1 is structured as far as the second end face 56. The range A2 is structured from the second end face 56 to the first end face 52. The range A3 is structured from the first end face 52 to the tip 40A.

Thus, because the number of reinforcing cords in the end portion 40 of the resin-covered cord 34A decreases toward the tip 40A in the winding direction, a change in bending stiffness of the belt 26 including the resin-covered cord 34A along the tire circumference direction in the vicinity of the location of the tip is suppressed.

In the range A1 in which the two reinforcing cords 30A and 30B are present, the bending stiffness of the belt 26 decreases due to the provision of the tapered surface 42C at the tip 40A side of this range (a range A12). At the tapered surface 42B (the range A2) and tapered surface 42A (the range A3) too, the bending stiffness of the belt 26 (the resin-covered cord 34A) similarly decreases toward the tip 40A.

Thus, a large change in stiffness of the belt 26 in the vicinity of the location of the tip of the resin-covered cord 34 is further suppressed (a step in stiffness is further suppressed).

Consequently, a concentration of bending stress caused by the action of pressure and heating during vulcanization molding of the tire 50 in the resin-covered cord 34B (see region P in Fig. 8) that is disposed one winding to the inner side in the tire axis direction from the end portion 40 of the resin-covered cord 34 (34A) is moderated, and a concentration of strain in this region may be suppressed. As a result, durability of the tire 70 is improved.

### - Variation -

In the third exemplary embodiment, a structure in which two of the reinforcing cords 30 are disposed in the resin-covered cord 34 is described. However, the number of reinforcing cords may be three or more, and may be one. A tire 70A in which the number of reinforcing cords is one is described. Where structural elements are the same as in the third exemplary embodiment, the same reference symbols are assigned and details thereof are not described here.

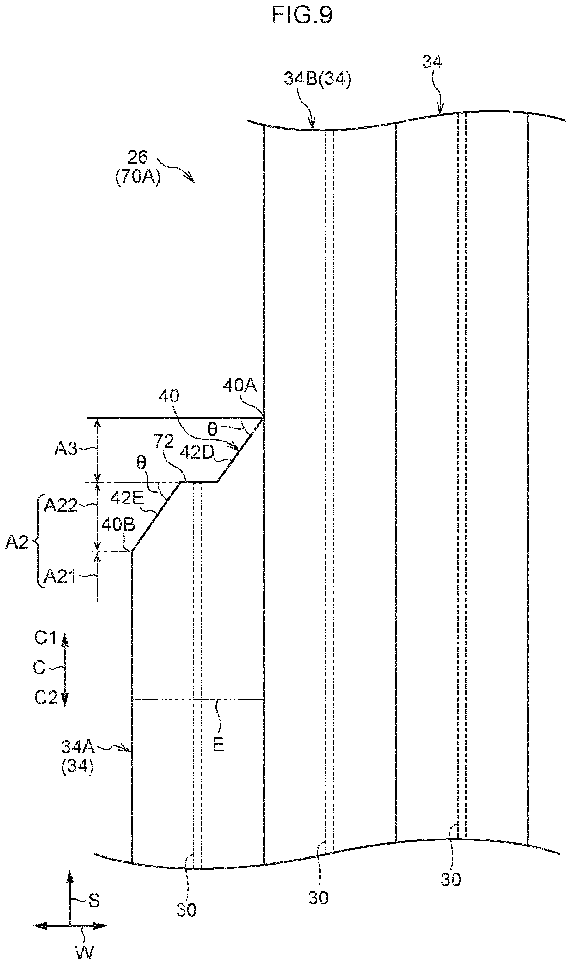

As shown in Fig. 9, only one of the reinforcing cords 30 is provided in the resin-covered cord 34 constituting the belt 26. The end portion 40 of the resin-covered cord 34A is provided with tapered surfaces 42D and 42E between the tire axis direction inner side end portion (tip) 40A and the tire axis direction outer side end portion 40B.

Because the tire 70A is structured thus, toward the tip 40A from the winding direction other end side (the direction of arrow C2) of the resin-covered cord 34A, a range A2 in which the one reinforcing cord 30 is present and a range A3 in which no reinforcing cord is present are structured at the end portion 40. The range A1 is structured as far as the end face 72. The range A3 is structured from the end face 72 to the tip 40A.

Thus, because the number of reinforcing cords in the end portion 40 of the resin-covered cord 34A decreases toward the tip 40A, a change in stiffness of the belt 26 including the resin-covered cord 34A along the tire circumference direction in the vicinity of the location of the tip is suppressed.

In the range A2 in which the one reinforcing cord 30 is present, the bending stiffness of the belt 26 decreases due to the provision of the tapered surface 42E at the tip 40A side of this range (a range A22). At the tapered surface 42D (the range A3) too, the bending stiffness of the belt 26 similarly decreases toward the tip 40A.

Thus, a large change in bending stiffness of the belt 26 along the tire circumference direction in the vicinity of the location of the tip of the resin-covered cord 34 is further suppressed (a step in stiffness is further suppressed).

Consequently, a concentration of bending stress caused by the action of pressure and heating during vulcanization molding of the tire 50 in the resin-covered cord 34B (see region P in Fig. 9) that is disposed one winding to the inner side in the tire axis direction from the end portion 40 of the resin-covered cord 34 (34A) is moderated, and a concentration of strain in this region may be suppressed. As a result, durability of the tire 70 is improved.

### = Fourth Exemplary Embodiment =

A tire according to a fourth exemplary embodiment of the present invention is described in accordance with the drawings. Structural elements that are the same as in the first to third exemplary embodiments are assigned the same reference symbols; details thereof are not described here. Only the shape of the end portion of the resin-covered cord differs from the tires according to the first to third exemplary embodiments. Therefore, only this region is described.

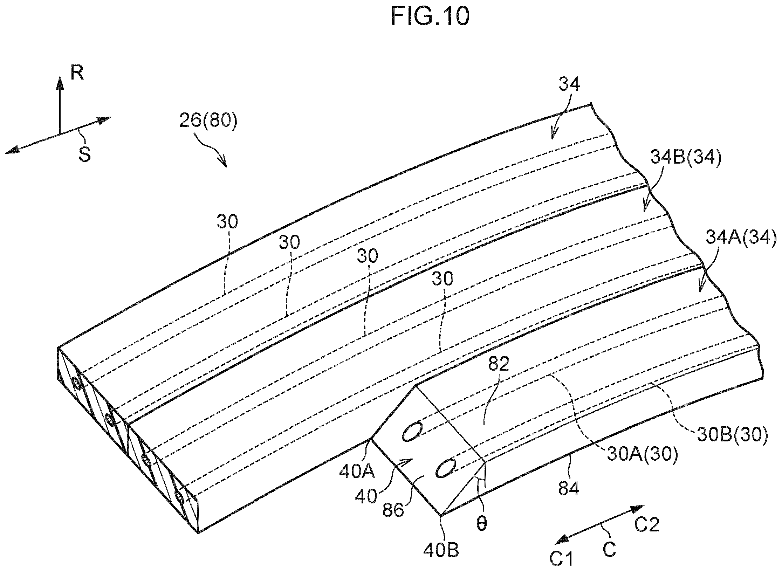

As shown in Fig. 10, a tapered surface 86 is formed at the end portion 40 of the resin-covered cord 34 constituting the belt 26 of a tire 80. The tapered surface 86 is angled to the tip 40A side (the winding direction one end side (the direction of arrow C1)) at an angle θ relative to a direction from the tire diameter direction outer side (an upper face 82) toward the tire diameter direction inner side (a lower face 84).

End portions of the reinforcing cords 30A and 30B are exposed at the tapered surface 86.

In the tire 80 that is formed thus, tire diameter direction heights of the end portion 40 of the resin-covered cord 34A decrease toward the tip 40A from the other end side (the direction of arrow C2) of the winding direction (the direction of arrow C). That is, the areas of tire diameter direction cross sections decrease toward the tip 40A.

As a result, a change in stiffness of the belt 26 constituted by the resin-covered cord 34 including the resin-covered cord 34A along the tire circumference direction in the vicinity of the location of the tip is suppressed.

Consequently, a concentration of bending stress caused by the action of pressure and heating during vulcanization molding of the tire 80 in the resin-covered cord 34B that is disposed one winding to the inner side in the tire axis direction from the end portion 40 of the resin-covered cord 34 (34A) is moderated, and a concentration of strain in this region may be suppressed. As a result, durability of the tire 80 is improved.

### - Variation -

In the fourth exemplary embodiment, a structure in which two of the reinforcing cords 30 are disposed in the resin-covered cord 34 is described. However, the number of reinforcing cords may be any number.

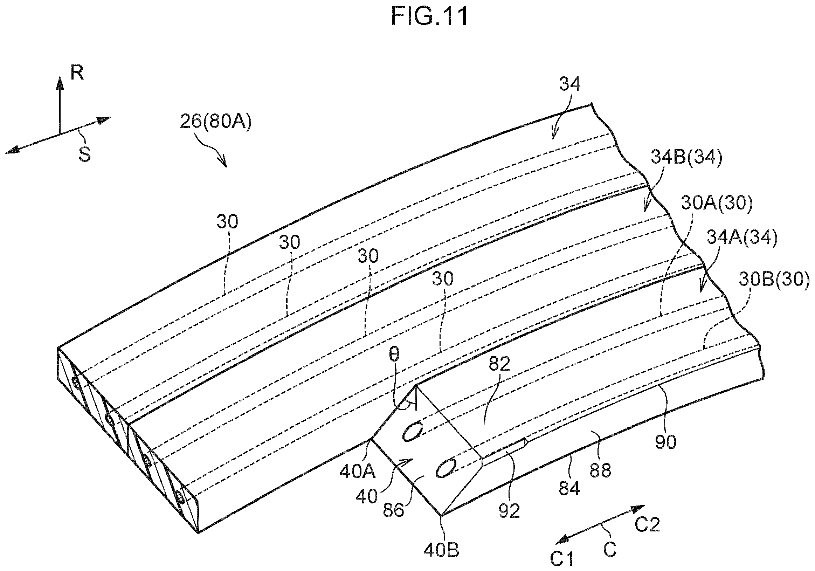

A tire 80A according to a variation is described with reference to Fig. 11. Where structural elements are the same as in the fourth exemplary embodiment, the same reference symbols are assigned and details thereof are not described here.

The tapered surface 86 of the resin-covered cord 34A that constitutes the belt 26 according to this variation is similar to the tapered surface 86 according to the fourth exemplary embodiment. An edge line 90 is formed by the upper face 82 and a tire axis direction outer side side face 88 of the resin-covered cord 34A. A chamfer portion 92 is formed at the side of the edge line 90 at which the tapered surface 86 (the tip 40A) is disposed.

Thus, because the chamfer portion 92 is provided at the side of the edge line 90 of the resin-covered cord 34A at which the tip 40A is disposed, the bending stiffness of the belt 26 at the winding direction other end side relative to the region in which the tapered surface 86 is formed may further decrease the bending stiffness of the belt 26 toward the tip 40A.

Thus, a change in stiffness of the belt 26 constituted by the resin-covered cord 34 including the resin-covered cord 34A along the tire circumference direction in the vicinity of the location of the tip is further suppressed.

Consequently, a concentration of stress, causing strain, in a region of the resin-covered cord 34B one winding to the inner side of the resin-covered cord 34A against which the tip 40A of the resin-covered cord 34A abuts may be prevented or suppressed. As a result, durability of the tire 80A is improved.

In particular, as in the fourth exemplary embodiment, the lengths of the reinforcing cords 30A and 30B are not different and a step in stiffness may not be suppressed. However, because the chamfer portion 92 is provided at the edge line 90, the step in stiffness may be moderated.

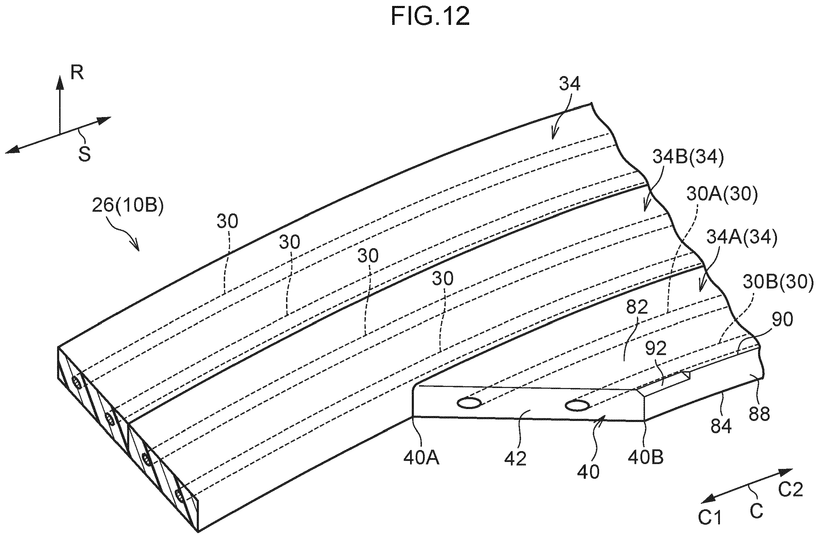

This variation may also be applied to the tire according to the first exemplary embodiment. As shown in Fig. 12, the chamfer portion 92 may be provided at the edge line 90 of the resin-covered cord 34A that constitutes the belt 26 of a pneumatic tire 10B. In consequence, a step in stiffness may be further suppressed and tire durability may be further improved.

The tapered surface 86 is formed in the fourth exemplary embodiment but structures are not limited thus, providing a structure decreases in tire diameter direction height and the areas of tire diameter direction cross sections decrease toward the tip 40A. For example, the shapes viewed in the tire diameter direction that are illustrated in the second exemplary embodiment and the third exemplary embodiment may be employed as shapes viewed in the tire axis direction.

### - Alternatives -

The number of reinforcing cords 30 covered by the resin 32 in the resin-covered cord 34 is not limited to two but may be three or more. The number of reinforcing cords 30 covered by the resin 32 may also be one.

Shapes of the end portion 40 of the resin-covered cord 34A are not limited by the present exemplary embodiments. However, the end portion 40 of the resin-covered cord 34A is required to be joined to (abutted against) the resin-covered cord 34B that is adjacent at the tire axis direction inner side thereof as far as the tip 40A.

When two or more of the reinforcing cords 30 are present in the resin-covered cord 34, the shape of an end face of the end portion 40 is not limited provided lengths in the winding direction of the reinforcing cords 30 are shorter toward the tire axis direction outer side (the closer each reinforcing cord 30 is from the tire axis direction outer side, the more distant an end portion exposure position thereof is from the tip 40A in the winding direction).

When plural end faces are formed at the end portion 40 as in the second and third exemplary embodiments, a plural number of the reinforcing cords 30 may be exposed at one end face (and the winding direction lengths of these plural reinforcing cords 30 may be equal).

In the first, third and fourth exemplary embodiments, tapered surfaces as seen in the tire diameter direction or tire axis direction are formed in linear shapes. However, tapered surfaces may be formed in curved shapes.

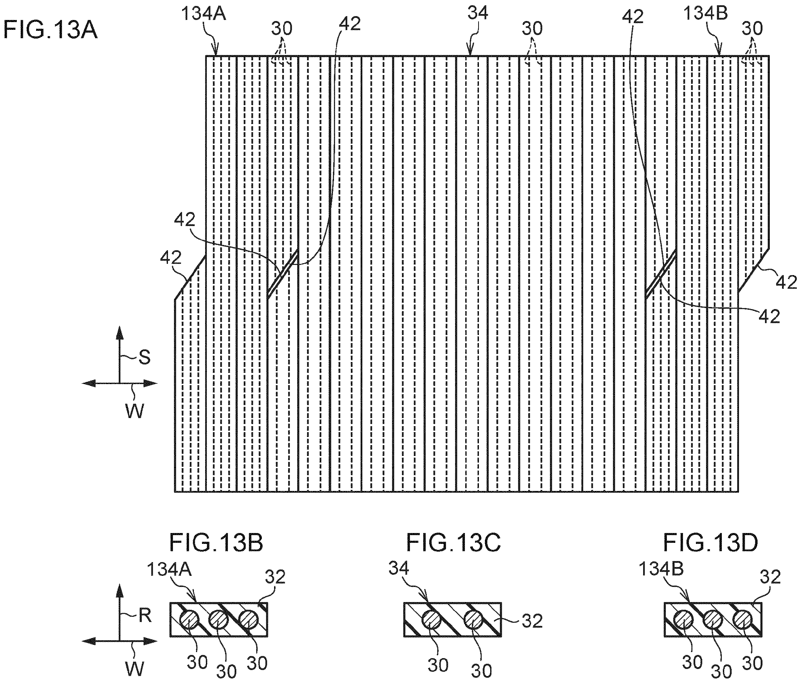

In the first to fourth exemplary embodiments, the belt 26 is formed by the single resin-covered cord 34 that is wound on in the helical shape, but the belt 26 may be formed of a plural number of resin-covered cords. For example, as in Fig. 13A to Fig. 13D, the resin-covered cord 34 in which two of the reinforcing cords 30 are covered with the resin 32 may be wound in a helical shape in a tire axis direction (belt width direction) central portion, and resin-covered cords 134A and 134B may be wound in helical shapes at both tire axis direction outer sides (both of end portions) of the resin-covered cord 34. In each of the resin-covered cords 134A and 134B, three of the reinforcing cords 30 are covered with the resin 32.

In this structure, the reinforcing cords 30 are cut at junction portions between the resin-covered cords 134A and 134B and the resin-covered cord 34. Therefore, the same issues arise as described in the first to fourth exemplary embodiments.

Accordingly, as shown in Fig. 13A, the tapered surface 42 may be formed at the two end portions of the resin-covered cord 34 and the tapered surface 42 may also be formed at tire axis direction inner side end portions of the resin-covered cords 134A and 134B. Thus, steps in stiffness at the junction portions between the resin-covered cord 34 and the resin-covered cords 134A and 134B may be moderated and tire durability may be improved.

The disclosures of Japanese Patent Application No. 2018-120276 filed June 25, 2018 are incorporated into the present specification by reference in their entirety.

All references, patent applications and technical specifications cited in the present specification are incorporated by reference into the present specification to the same extent as if the individual references, patent applications and technical specifications were specifically and individually recited as being incorporated by reference.

## Claims

1. A tire comprising:
a ring-shaped tire skeleton member; and
a belt, in which a resin-covered cord is wound in a helical shape in a tire circumference direction at an outer periphery of the tire skeleton member and is joined to the tire skeleton member, portions of the resin-covered cord that are adjacent to one another in a tire axis direction being joined to one another, and the resin-covered cord being formed of a reinforcing cord covered with a covering resin,
wherein an end portion of the resin-covered cord is joined to a portion of the resin-covered cord that is adjacent to a tire axis direction inner side of the end portion, areas of cross sections in a tire diameter direction of the end portion decrease toward a tip of the resin-covered cord, and the reinforcing cord is exposed at an end face of the resin-covered cord.

2. The tire according to claim 1 wherein, from the tire axis direction inner side toward a tire axis direction outer side, the end portion of the resin-covered cord becomes more distant from the tip of the resin-covered cord in a winding direction of the resin-covered cord.

3. The tire according to claim 2, wherein a tapered surface is formed at the end portion of the resin-covered cord, the tapered surface being angled toward the tip of the resin-covered cord from the tire axis direction outer side toward the tire axis direction inner side as seen in the tire diameter direction.

4. The tire according to claim 2 or claim 3, wherein a plurality of end faces in step shapes are formed at the end portion of the resin-covered cord such that, from the tire axis direction inner side toward the tire axis direction outer side as seen in the tire diameter direction, the end faces become more distant from the tip of the resin-covered cord in the winding direction.

5. The tire according to any one of claims 1 to 4, wherein:
a plurality of reinforcing cords are disposed side by side in the tire axis direction in the resin-covered cord, and
the further each reinforcing cord is from the tire axis direction outer side, the more distant an end portion exposure position of each reinforcing cord is from the tip of the resin-covered cord in the winding direction of the resin-covered cord.

6. The tire according to claim 1, wherein tire diameter direction heights of the end portion of the resin-covered cord decrease toward the tip of the resin-covered cord in the winding direction of the resin-covered cord.

7. The tire according to claim 6, wherein a tapered surface is formed at the end portion of the resin-covered cord, the tapered surface being angled toward the tip of the resin-covered cord from the tire axis direction outer side toward the tire axis direction inner side as seen in the tire axis direction.

8. The tire according to any one of claims 1 to 7, wherein an edge line at a tire axis direction outer side of the end portion of the resin-covered cord is chamfered at a side of the edge line at which the tip of the resin-covered cord is disposed.

9. A tire comprising:
a ring-shaped tire skeleton member; and
a belt, in which a plurality of resin-covered cords are wound in a helical shape in a tire circumference direction at an outer periphery of the tire skeleton member and are joined to the tire skeleton member, the resin-covered cords being disposed side by side in a tire axis direction, portions of the resin-covered cords that are adjacent to one another in the tire axis direction being joined to one another, and the resin-covered cords being formed of reinforcing cords covered with a covering resin,
wherein an end portion of each resin-covered cord is joined to a portion of each resin-covered cord that is adjacent to a tire axis direction inner side of the end portion, the reinforcing cords are exposed at an end face of the resin-covered cords, and
the further each reinforcing cord is from the tire axis direction outer side, the more distant an end portion exposure position of each reinforcing cord is from a tip of the resin-covered cord in a winding direction of the resin-covered cord.
